# EUROPEAN PATENT APPLICATION

(11) **EP 4 335 289 A1**
(43) Date of publication of application: **13.03.2024**
(21) Application number: 23195752.3
(22) Date of filing: 06.09.2023
(51) Int. Cl.: A01K 77/00

(54) **LANDING NET**

(30) Priority: 08.09.2022 GB 202213129; 03.05.2023 GB 202306547
(71) Applicant: D4Design Ltd, London EC1V 2NX (GB)
(72) Inventor: Tiller, Carl, Staines Upon Thames, TW18 4US (GB); Drewett, Ross, Worcester Park, KT4 7QW (GB)
(74) Representative: King, Alex

(57) **Abstract**

The present invention relates to a landing net for use in fishing, and in particular, provides a landing net for fishing comprising
- a frame,
- a first mesh which connects to the frame to form a net with an opening at the frame, and
- a second mesh connected to a closure means which enables the second mesh to cover the opening, wherein
the second mesh has a first position where the opening at the frame of the fishing net is open, and a second position where the second mesh covers the opening at the frame of the fishing net, the second mesh being joined to the first mesh at or close to the top of the first mesh or being connected to the frame; the second mesh further being provided with weights of other means such that the second mesh in the first position hangs below the frame and inside the first mesh, and where the depth of the second mesh in the first position is from 30-100% of the depth of the first mesh.

## Description

The present invention relates to a landing net for use in fishing.

Landing nets are one of the most important pieces of fishing equipment for many types of fishing. In particular, a landing net is used to lift a hooked fish out of the water.

Landing nets generally have a frame with a mesh net which, in use, hangs from the frame. The frame provides an opening by which the net can "catch" a fish, typically by lifting the net from below a fish. The frame is connected to a long handle to allow the user to manoeuvre the net under the fish, and then to lift the net to "catch" the fish.

Carp fishing nets, for example, typically have a large triangular frame to give a wide gape opening. A high-quality net will have materials (frame, handle, mesh) strong enough to safely land a fish that may be many kilograms in weight.

Such nets are generally not suitable to store a fish due to the opening at the frame. It is known to "store" caught fish in mesh retention bags, which can also be used for weighing. However, many fisheries are now banning the use of such retainers.

A landing net has now been designed which can act as a conventional landing net, but which can also be closed to retain the caught fish.

Thus, in a first aspect the present invention provides a landing net for fishing comprising
- a frame,
- a first mesh which connects to the frame to form a net with an opening at the frame, and
   - a second mesh connected to a closure means which enables the second mesh to cover the opening at the frame, wherein
- the second mesh has a first position where the opening at the frame of the fishing net is open, and a second position where the second mesh covers the opening at the frame of the fishing net,
- the second mesh being joined to the first mesh at or close to the top of the first mesh or being connected to the frame; the second mesh further being provided with weights of other means such that the second mesh in the first position hangs below the frame and inside the first mesh, and where the depth of the second mesh in the first position is from 30-100% of the depth of the first mesh.

The fishing net comprises a frame and a first mesh which connects to the frame to form a net with an opening at the frame. The frame and first mesh form a "conventional" fishing net structure, and may be of any types as known in the art.

Typically, the frame is planar. For example, the frame may be planar and triangular, circular or oval. The frame may be made of a plastic, a fiber glass, a carbon fiber or metal material, such as aluminium. Aluminium tubing is common due to its strength and light weight. More recently, carbon fiber and fibre glass have also been commonly used. The frame may be made in sections so that it can be folded for storage and transport.

The first mesh may be any conventional mesh material. It may be made of a plastic, such as polyethylene, polypropylene or nylon. In some preferred embodiments the mesh is made of a biodegradable material, such as a biodegradable plastic.

The first mesh connects to the frame to form a net with an opening at the frame. The net has a closed bottom end, with the only opening being that at the frame. The first mesh generally adopts the shape of the frame at its top and, when the landing net is lifted or is in water, hangs below the frame with a closed bottom end. ("Below" or "lower" will be used herein by reference to the frame as the "top" and with the first mesh hanging below the frame.)

The amount by which the first mesh hangs may be referred to as the depth of the first mesh. This can vary, but is typically 50 to 100cm.

The first mesh connects to the frame to form a net with an opening at the frame. The opening is generally greater than 500cm² in area. For example, triangular nets may have a side length of greater than 40cm.

In some embodiments the frame may be lighter than water such that the frame floats on the surface of the water. In embodiments, floats may be provided on the frame to provide buoyancy.

In some embodiments, one or more rigid bars may be provided on one or more sides of the frame. This can assist in providing stability (rigidity) for otherwise less rigid frames. These bars may be made of similar types of materials as the frame, such as plastic, metal, a fiber glass or a carbon fiber material.

In some embodiments one or more bars can be used which provide both improved rigidity and buoyancy, so that separate bars and floats are not required.

It is preferred that any floats or bars which may be provided to provide buoyancy are attachable to and detachable from the frame, preferably using clips. The landing net, or at least the frame, in the absence of these floats or bars may be denser than water or of similar density to water, such that the landing net can be easily lowered below the surface of water to aid the landing of a fish. Once a fish has been landed, then floats/bars which provide buoyancy may be added, for example tied or clipped to the frame, such that the frame of the landing nets floats. (The opening part of the first mesh, even if covered by the second mesh in the second position, sits at or above the surface of the water in this case,)

At least in use the landing net generally comprises a handle which is connected to the frame. The handle may be connected to the frame by any suitable connecting means. In embodiments the handle may be connected to the frame using a spreader block, such as known in the art. The handle may also be generally as known in the art. Typically the handle is in the form of a pole of significant length, such as at least 60cm. The handle may generally be made of any suitable material, such as metal, especially aluminium, carbon fiber or fiberglass materials. The handle may be solid or tubular. The handle may be extendible, for example, having nested tubes. The handle is usually detachable from the frame, for example with a screw or quick release fitting.

The present invention is characterised in that the fishing net comprises a second mesh, which second mesh is connected to a closure means which enables the second mesh to cover the opening. By "cover the opening" as used herein means that the opening should be closed sufficiently to prevent a fish swimming through the opening. (It is not necessary for the opening to be completely closed, for example.)

The second mesh may be made of any suitable material, with particular preference being for the same materials conventionally used for fishing net meshes, and in particular for the first mesh.

The second mesh has a first "position" (and in particular where the closure means has not been activated) where the opening at the frame of the fishing net is open, and a second position (and in particular where the closure means has been activated) where it covers the opening at the frame of the fishing net. In the second position a fish inside the landing net is safely and securely retained therein.

In the second position (of the second mesh) the frame retains the same or essentially the same shape, for example planar and triangular, circular or oval, as in the first position. Thus, the second position provides an enclosed volume of the same general shape as the open landing net, but with a covered opening.

The second mesh is joined to the first mesh at or close to the top of the first mesh or is connected to the frame. In addition, the second mesh is provided with weights of other means such that the second mesh in the first position hangs below the frame and inside the first mesh. The depth of the second mesh in the first position is from 30-100% of the depth of the first mesh

The second mesh may be joined to the first mesh or the frame in any suitable manner. It may, for example, be sewn to the first mesh at or close to the top of the first mesh (i.e. to where the first mesh is connected to the frame.) Alternatively, it may be connected directly to the frame.

The second mesh, in the first position sits, and in particular hangs, below the frame and inside the first mesh. It may, in particular, have a similar shape (cross-section) to the first mesh, and nest within the first mesh, but with openings at both ends (top and bottom). The second mesh is connected at its top end to the frame, or, and preferably, at or close to the top of the first mesh.

The "lower" part of the second mesh will, in the first position, hang below the frame and inside the first mesh. The second mesh generally has a "depth" (measured in the direction it hangs in the landing net in the first position) which is from 30-100% of the depth of the first mesh. Although it may generally have a similar cross-section as the first mesh, for example triangular, the second mesh may be tapered so that its depth relative to the depth of the first mesh may vary. In this case, the depth of the second mesh relative to the first mesh, as used herein, refers to the maximum depth relative to the first mesh. A taper may be used, for example, to minimise the amount of excess mesh when the second mesh is in the second position.

The second mesh is provided with weights or other means, such as weighted cord, which cause the mesh to hang below the frame and inside the first mesh. This should be the case both in and out of the water i.e. the weights or other means should be denser than water.

The first mesh may also include weights or other means, such as weighted cord, which cause the mesh to hang from the frame, and again preferably both in and out of the water.

The closure means enables the second mesh to cover the opening of the net. In preferred embodiments, the closure means is a drawstring connected to the second mesh. When pulled it causes the open end of the second mesh to close. The drawstring, in particular the end of the drawstring which is to be pulled by the user, may comprise a handle, ball or other means to allow it to be easily pulled with one hand.

The present invention has the advantage that it is possible to retain fish in a simple manner in the landing net. There is no need for a separate retention bag. There is further no need for handling of the fish, for example to transfer from a landing net to another net or bag. Minimising physical contact minimises stress for a caught fish.

In embodiments, the second mesh may be biased to the "first position". By this is meant that, if not otherwise held, in particular in the second position, and if it is not already in the first position, then the second mesh moves back to the first position if it is not already in the first position (and stays in the first position if it already is in the first position).

As a preferred example, where the closure means comprises a drawstring, the drawstring may be elasticated. When the drawstring is pulled (the closure means is activated) the second mesh closes the opening. When the drawstring is released, the elasticity of the drawstring moves the second mesh to move back to the first position (and the opening re-opens).

The drawstring may typically be connected to, and in particular is preferably connected along, the bottom of the second mesh (the end remote from the frame), such that when pulled the bottom end of the second mesh is constricted and the edges at the bottom move towards each other to cover the opening at the frame. To aid both this movement and the return of the second mesh to the first position, the drawstring may pass through eyelets or other rings or loops, typically made of plastic or metal, along the bottom of the second mesh, these allowing the drawstring to run freely. Metal eyelets are preferred in some embodiments, since these can also be used as "weights", either alone or with other weights/means, which cause the second mesh to hang inside the first mesh in the first position. (The weight of these can also act, at least partially, to bias the second mesh in the first position.) In addition, one or more rings or eyelets can be provided on the handle and/or the spreader block, and optionally on the frame if needed, to guide the drawstring.

In another example, which may be used in conjunction with a drawstring, elastic seams may be provided on the second mesh, for example one or more seams may be provided which generally extend in a direction from the top to the bottom of the second mesh. ("Top" and "bottom" again being used here to refer, in the case of "top" to the end of second mesh closest to the frame, and in the case of "bottom" being the end remote from the frame.) The elasticated seams are in an unstretched state in the first position, but are stretched in the second position. In this way, when the second mesh is not held in the second position then the elasticated seams cause it to return to the first position.

In embodiments, a retaining means, such as a cleat, a clip, such as a spring-loaded toggle clip, or other retaining means, may be provided for the closure means. Such retaining means retains (holds) the second mesh in the second position when activated, particularly where the second mesh is biased to the first position.

When an elasticated drawstring is used, for example, a cleat or clip allows the drawstring to be held so that the second mesh is retained in the second position. However, a cleat or clip or other retaining means may also be present even when not using an elasticated drawstring or even in the "first position" - it may be useful simply to keep a non-elasticated drawstring tidy for example. In preferred embodiments, where the landing net comprises a handle connected to the frame by a connecting means, a cleat, a clip or other retaining means may be located on the handle, such as at the end of the handle remote to the frame, or on the connecting means.

A particularly preferred embodiment comprises a clamp, for example a 2 point lever clamp, through which a drawstring can be pulled in one direction, in particular to move the second mesh from the first position to the second position. The clamp may sit on the handle or, preferably, on the connecting means, such as a spreader block. The clamp, unless released, prevents the drawstring moving in the other direction i.e. prevents the second mesh returning to the first position even if the drawstring is no longer being pulled. The clamp may be released by pressing one or more buttons or switches. Once released the drawstring may then pass through the clamp in the other direction, allowing the second mesh to return to the first position, most preferably due to a bias to the first position as already described.

Whilst a clamp provided on a spreader block is a preferred embodiment for a retaining means it will however be appreciated that a number of other retaining means may be provided for holding a drawstring in the second position. We have already mentioned a cleat or other clip for a drawstring. Another example would be a recess provided on a handle at a position corresponding to the location of a toggle, hook, handle, ball or other suitable component on the drawstring when the second mesh is in the second position. The drawstring is pulled to move the second mesh to the second position and the toggle/hook etc can then be slotted into the recess to hold the second mesh in the second position.

The present invention may be illustrated by the following Figures.

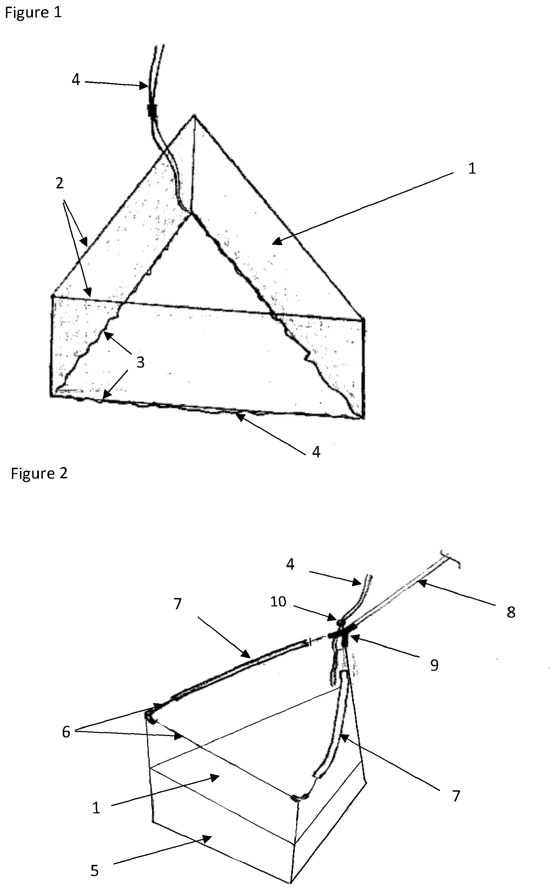

Figure 1 shows a second mesh (1) for a landing net. It comprises mesh sides, in this case forming a triangular mesh for use in a triangular landing net. The mesh has an open "top" bounded by top edge (2) and an open "bottom" bounded by bottom edge (3). Around the bottom edge of the second mesh is a drawstring (4).
Figure 2 shows a landing net according to the present invention. Figure 2 shows the second mesh (1) of Figure 1. A first mesh (5) hangs from a frame (6), which in this case is also triangular. Also provided are floats (7) located on the frame (6) and a handle (8) connected to the frame (6). (Floats (7) are shown on two sides of the frame (6), but can be on a single side or on all three sides in other embodiments.) As shown in Figure 2 the handle may be connected to the frame (6) by a spreader block (9). The second mesh (1) is provided inside the first mesh (5), and in particular the top edge of the second mesh (1) is sewn to the first mesh (5) along the length of its top edge. In the Figure the depth of the second mesh (1) is approximately half of the total depth of the first mesh (5).
   The drawstring (4) passes through an eyelet (10) located on the corner of the spreader block (9) where connected to the handle (8), and then passes to the far end (not shown) of the handle (8). The drawstring (4) may be held or retained at the far end of the handle (8) by a suitable means, such as a cleat.
   In the configuration of Figure 2, the opening of the frame is open, which would allow a fish to be caught in the net.

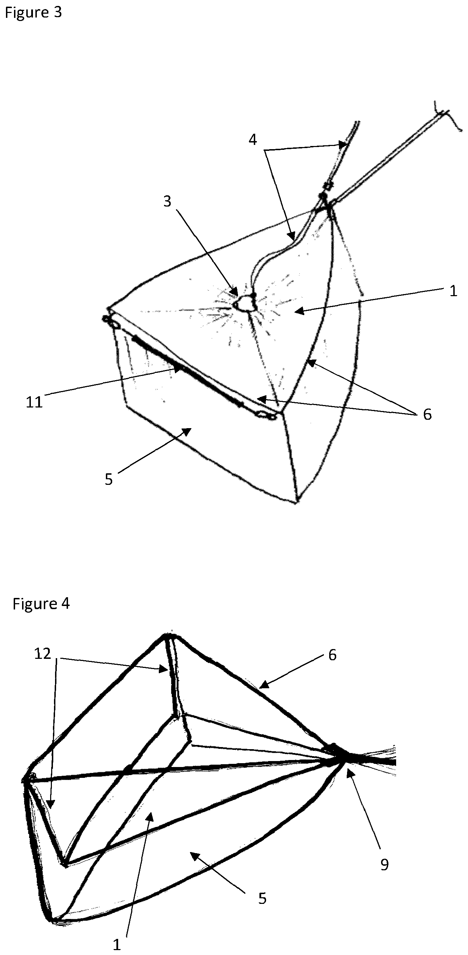

Figure 3 shows the landing net of Figure 2 after closure. In particular, pulling of the drawstring (4) causes the bottom edge (3) of the second mesh (1) to pull upwards and inwards, causing the second mesh (1) to close over the opening of the frame (6). Thus, the fish can be safely and securely retained. (The first mesh portion (5) and the frame (6) retain their original shape.)
Figure 3 also shows an additional bar (11) which has been fitted to the frame to give additional stability. This can be advantageous for otherwise less rigid frames, and although only shown on one side in Figure 3, such bars may be provided as required.
Figure 4 shows a further landing net according to the present invention. Figure 4 again shows a second mesh (1) which hangs inside a first mesh (5) from a frame (6). In this example, first mesh (5), the second mesh (1) and the frame (6) are again triangular, but in the case the two sides of the second mesh (1) taper in height in the direction of the spreader block (9). The second mesh (1) is provided with two elastic seams (12) at its edges remote from the spreader block (9). In the absence of a holding means these bias the second mesh (1) to the first position (that shown in Figure 4). In the configuration of Figure 4, the opening at the frame (6) is open, which would allow a fish to be caught in the net. On pulling of a drawstring to close the opening the elastic seams (12) would be stretched, and in particular with the bottom of each pulled towards the spreader block (9). In particular, the closed landing net would be largely similar to that shown in Figure 3, with the elastic seams (12) stretched towards the centre.

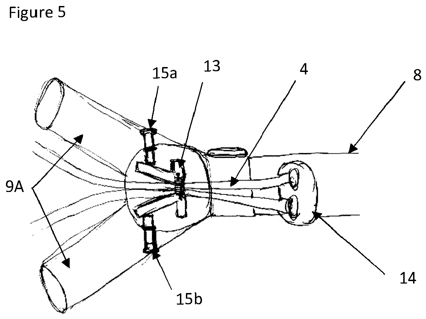

Figure 5 shows a close-up view of a spreader block. The spreader block has two connections (9A) which in use connect to the frame (not shown) and also connects to a handle (8), part of which is shown. On the spreader block is provided a 2 point lever clamp (13), through which the drawstring (4) can be pulled using a ball grip (14). The clamp (13) allows the drawstring (4) to be pulled through in one direction (left to right as shown), but unless released, prevents the drawstring moving in the other direction. Applied to the landing net in the closed/second position of Figure 3, for example, the clamp (13) holds the second mesh in the second position even if the drawstring (4) is no longer being pulled. The clamp (13) may be released by pressing two buttons (15a, 15b) provided on either side, thus allowing the drawstring to pass through the clamp (13) in the other direction, and in particular allowing the second mesh to return to the first position.

## Claims

1. A landing net for fishing comprising
- a frame,
- a first mesh which connects to the frame to form a net with an opening at the frame, and
- a second mesh connected to a closure means which enables the second mesh to cover the opening of the net, wherein
the second mesh has a first position where the opening at the frame of the fishing net is open, and a second position where the second mesh covers the opening at the frame of the fishing net,
the second mesh being joined to the first mesh at or close to the top of the first mesh or being connected to the frame; the second mesh further being provided with weights of other means such that the second mesh in the first position hangs below the frame and inside the first mesh, and where the depth of the second mesh in the first position is from 30-100% of the depth of the first mesh.

2. . A landing net according to claim 1 wherein the frame is planar and triangular.

3. . A landing net according to claim 1 or claim 2 wherein floats are provided on the frame.

4. . A landing net according to any one of the preceding claims wherein the landing net comprises a handle which is a pole of length at least 60cm, connected at one end to the frame by a connecting means, and wherein the closure means can be activated from a position on the handle, such as at the end of the handle remote to the frame, or from the connecting means.

5. . A landing net according to any one of the preceding claims wherein the closure means comprises a drawstring.

6. . A landing net according to any one of the preceding claims wherein the landing net comprises a cleat, a clip, such as a spring-loaded toggle clip, or other retaining means for the closure means.

7. . A landing net according to claim 6 wherein the landing net comprises a handle which is a pole of length at least 60cm, connected at one end to the frame by a connecting means, and wherein the cleat, a clip or other retaining means is located on the handle, such as at the end of the handle remote to the frame, or on the connecting means.

8. . A landing net according to claim 6 or claim 7 wherein the landing net comprises a 2 point lever clamp, through which a drawstring can be pulled in one direction, in particular to move the second mesh from the first position to the second position, but which, unless released, prevents the drawstring moving in the other direction.

9. . A landing net according to any one of the preceding claims wherein the second mesh is biased to the first position.

10. . A landing net according to claim 9 wherein the closure means comprises an elasticated drawstring.

11. . A landing net according to claim 10 wherein the drawstring is connected along the bottom of the second mesh (the end remote from the frame), such that when pulled the bottom end of the second mesh is constricted and the edges at the bottom move towards each other to cover the opening at the frame, and wherein the drawstring passes through eyelets or other rings or loops, typically made of plastic or metal, along the bottom of the second mesh.

12. . A landing net according to claim 11 wherein the eyelets, ring or loops are metal.

13. . A landing net according to any one of claims 9 to 12 wherein elastic seams may be provided on the second mesh, wherein the elasticated seams are in an unstretched state in the first position, but are stretched in the second position.
